(19) Europäisches Patentamt / European Patent Office / Office européen des brevets

(11) **EP 3 458 814 B1**

(12) **EUROPÄISCHE PATENTSCHRIFT**

(45) Veröffentlichungstag und Bekanntmachung des Hinweises auf die Patenterteilung:
**26.07.2023   Patentblatt 2023/30**

(21) Anmeldenummer: **17719616.9**

(22) Anmeldetag: **27.04.2017**

(51) Internationale Patentklassifikation (IPC):
**G01F 1/84** [(2006.01)]

(52) Gemeinsame Patentklassifikation (CPC):
**G01F 1/8409; G01F 1/8422; G01F 1/8477**

(86) Internationale Anmeldenummer:
**PCT/EP2017/060076**

(87) Internationale Veröffentlichungsnummer:
**WO 2017/198439 (23.11.2017 Gazette 2017/47)**

(54) **MESSAUFNEHMER VOM VIBRATIONSTYP**

VIBRATION-TYPE SENSOR

CAPTEUR DE MESURE DU TYPE À VIBRATIONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.05.2016   DE 102016109251**

(43) Veröffentlichungstag der Anmeldung:
**27.03.2019   Patentblatt 2019/13**

(73) Patentinhaber: **Endress+Hauser Flowtec AG**
**4153 Reinach (CH)**

(72) Erfinder:
• **RIEDER, Alfred**
**84032 Landshut (DE)**
• **ECKERT, Gerhard**
**79639 Grenzach-Wyhlen (DE)**
• **BITTO, Ennio**
**4147 Aesch (CH)**
• **ZHU, Hao**
**85354 Freising (DE)**

(74) Vertreter: **Hahn, Christian et al**
**Endress+Hauser Group Services**
**(Deutschland)AG +Co. KG**
**Colmarer Straße 6**
**79576 Weil am Rhein (DE)**

(56) Entgegenhaltungen:
**EP-A1- 1 130 367      EP-A1- 1 729 099**
**US-A1- 2011 036 179**

**Beschreibung**

Die vorliegende Erfindung betrifft einen Messaufnehmer vom Vibrationstyp, insbesondere zur Messung des Massedurchflusses und/oder der Dichte eines Mediums. Derartige Messaufnehmer umfassen gewöhnlich mindestens ein schwingfähiges Messrohr, insbesondere mindestens ein Paar von schwingfähigen Messrohren.

Gewöhnlich werden Schwingungen im so genannten f1-Mode angeregt, deren Eigenfrequenz dichteabhängig ist und damit eine Bestimmung der Dichte ermöglicht. Der Schwingung im f1-Mode wird eine durchflussabhängige Schwingung im Coriolismode, dem so genannten f2-Mode, überlagert, deren Quantifizierung eine Bestimmung des Massedurchflusses ermöglicht. Zum Anregen der Schwingungen weisen die Messaufnehmer gewöhnlich einen elektrodynamischen Erreger auf, welcher eine periodische Transversalkraft auf das Messrohr ausübt. Insbesondere bei Messaufnehmern mit in der Ruhelage gebogenen Messrohren ist der elektrodynamische Erreger gewöhnlich nahe dem Scheitelpunkt des Messrohrbogens an dessen Innenseite angeordnet.

In den noch unveröffentlichten Patentanmeldungen DE 10 2015 122 661 und DE 10 2015 112 737 ist beschrieben, dass sich die Genauigkeit der Dichtemessung und der Durchflussmessung erheblich steigern lässt, wenn neben der Eigenfrequenz des f1-Modes auch die Eigenfrequenz des f3-Modes berücksichtigt wird. Dies betrifft insbesondere Messungen von Gasen oder mehrphasigen kompressiblen Medien, beispielsweise Flüssigkeiten mit Gasbeladung, insbesondere in Form von Mikroblasen. Insofern besteht ein Interesse daran, nicht nur den f1-Mode sondern auch den f3-Mode anzuregen.

Die Veröffentlichung US 2011 0036179 A1 offenbart ein Durchflussmessgerät zum Betrieb bei sehr hohen Frequenzen, beispielsweise oberhalb von 1500 Hz bzw. 2000 Hz. Dazu sind höhere Moden anzuregen, beispielsweise der F3-Mode.

Die Veröffentlichung EP 1 729 099 A1 offenbart ein Coriolis Massedurchflussmessgerät mit einen einzigen u-förmigen Messrohr, bei welchem der F3-Mode mittels einer positiven Rückkopplungsschleife angeregt werden soll, um die Auskopplung von Vibrationsenergie zu minimieren.

Die Veröffentlichung EP 1 130 367 A1 offenbart ein Coriolis Massedurchflussmessgerät mit einen einzigen v-förmigen Messrohr, bei welchem der F3-Schwingungsmode mittels eines Gegenschwingerkörpers ausbalanciert wird.

Untersuchungen im Zusammenhang mit der vorliegenden Erfindung haben gezeigt, dass der f3-Mode nahe dem Scheitel des Messrohrbogens an dessen Innenseite eine Knotenebene aufweist, die eine effektive Anregung des f3-Modes erschwert.

Es ist daher die Aufgabe der vorliegenden Erfindung, einen Messaufnehmer vom Vibrationstyp bereitzustellen, der eine effektive Anregung des f3-Modes ermöglicht.

Die Aufgabe wird erfindungsgemäß gelöst durch den Messaufnehmer gemäß dem unabhängigen Patentanspruch 1.

Der erfindungsgemäße Messaufnehmer vom Vibrationstyp umfasst: einen Trägerkörper; mindestens ein gebogenes Messrohr zum Führen eines Fluids, welches Messrohr, einen einlassseitigen Endabschnitt und einen auslassseitigen Endabschnitt aufweist, wobei das Messrohr am einlassseitigen Endabschnitt, und am auslassseitigen Endabschnitt von dem Trägerkörper gehalten ist, wobei das Messrohr einen frei schwingfähigen Abschnitt aufweist; einen elektrodynamischen Erreger in einer Erregerleiterschleife zum Anregen von Biegeschwingungen des Messrohrs; wobei eine Messrohrlängsebene definiert ist als eine Ebene, bei welcher ein Integral entlang einer Messrohrmittenlinie des schwingfähigen Abschnitts der Abstandsquadrate zwischen der Messrohrmittenlinie in der Ruhelage des Messrohrs und der Ebene ein Minimum aufweist, wobei eine Messrohrquerebene definiert ist, zu der das Messrohr einen spiegelsymmetrischen Verlauf aufweist, wobei die Messrohrquerebene senkrecht zur Messrohrlängsebene verläuft; wobei das Messrohr einen ersten zur Messrohrquerebene spiegelsymmetrischen Biegeschwingungsmode mit einer ersten Eigenfrequenz f1 aufweist die von der Dichte eines durch das Messrohr geführten Mediums abhängt, wobei das Messrohr einen zweiten zur Messrohrquerebene spiegelsymmetrischen Biegeschwingungsmode mit einer zweiten Eigenfrequenz f3 aufweist, die von der Dichte des durch das Messrohr geführten Mediums abhängt, wobei die zweite Eigenfrequenz größer ist als die erste Eigenfrequenz f1, wobei das Messrohr eine Scheitelsekante aufweist, welche die Punkte der äußeren Oberfläche der Messrohrwand schneidet, die in der Ruhelage des Messrohrs auf der Schnittlinie zwischen der Messrohrlängsebene und der Messrohrquerebene liegen, wobei die Scheitelsekante einen Schwingungsknoten aufweist, wenn das Messrohr im zweiten spiegelsymmetrischen Biegeschwingungsmode schwingt, wobei die Erregerleiterschleife einen ohmschen Widerstand $R_\Omega$ aufweist, wobei die Betriebsschaltung dazu eingerichtet ist, die Erregerleiterschleife mit einem Signal zum Anregen des zweiten spiegelsymmetrischen Biegeschwingungsmodes zu treiben, wobei die Erregerleiterschleife weiterhin einen von dem Schwingungsmode abhängigen Gegeninduktionswiderstand $R_{g3}$ aufweist, der von der Position des Erregers abhängt; wobei der Messaufnehmer mindestens ein Paar von solchen Messrohren mit einer gemeinsamen Messrohrquerebene umfasst, wobei der elektrodynamische Erreger dazu eingerichtet ist, Biegeschwingungen der Messrohre gegeneinander anzuregen,

wobei der Erreger so positioniert ist, dass ein dimensionsloser Leistungsfaktor

$$pc_3 = \frac{4 \cdot R_\Omega \cdot R_{g3}}{\left(R_\Omega + R_{g3}\right)^2}$$

einen Wert aufweist, der nicht weniger als 0,8 beträgt, wenn das Messrohr mit Wasser gefüllt ist und bei 300 K mit der Eigenfrequenz des zweiten spiegelsymmetrischen Biegeschwingungsmodes von dem elektrodynamischen Erreger zu Biegeschwingungen angeregt wird.

Gemäß einer Ausgestaltung dieser Weiterbildung der Erfindung, weisen die Messrohre parallele Messrohrlängsebenen auf.

Zwei Gesichtspunkte des Gegeninduktionswiderstands führen zu der obigen Bedingung. Einerseits bewirkt die Relativgeschwindigkeit zwischen der Spule des elektrodynamischen Erregers und dessen Magneten eine Gegeninduktionsspannung, die ein Maß für die Anregung eines Biegeschwingungsmodes ist. Andererseits wirkt diese Gegeninduktionsspannung einer Erregerspannung in der Erregerleiterschleife entgegen, so dass sie den Erregerstrom begrenzt. Diese beiden Gesichtspunkte gehen in den obigen Leistungsfaktor ein, der Werte zwischen null und eins annimmt, und maximal wird, wenn Gegeninduktionswiderstand gleich dem ohmschen Widerstand ist.

Da die Relativgeschwindigkeit zwischen der Spule des elektrodynamischen Erregers und dessen Magneten, proportional zur modenspezifischen Schwingungsamplitude $X_i$ des i-ten Biegeschwingungsmodes am Ort des Erregers ist, kann der Gegeninduktionswiderstand über die Positionierung des Erregers kontrolliert werden. Die Auswahl eines Orts maximaler Schwingungsamplitude als Erregerposition des Messrohrs ist gegebenenfalls abzusehen, denn insbesondere bei höheren Moden, beispielsweise dem f3-Mode können dort so große Geschwindigkeiten auftreten, dass der Gegeninduktionswiderstand den ohmschen Widerstand der Erregerleiterschleife deutlich übersteigt. In diesem Fall kann der jeweilige Mode nicht mehr effektiv angeregt werden. Daher schlägt die Erfindung vor, die Effektivität der Anregung höherer Moden beim Positionieren des elektrodynamischen Erregers zu berücksichtigen.

Die oben genannten Testbedingungen einer Füllung des Messrohrs mit Wasser bei 300 K, definieren keinerlei Beschränkungen für das Einsatzgebiet des erfindungsgemäßen Messaufnehmers, insbesondere nicht für das Temperatureinsatzgebiet oder die Medien. Da jedoch der Gegeninduktionswiderstand von der Güte und der Eigenfrequenz des Messrohrs im betrachteten Schwingungsmode abhängt, in welche Medieneigenschaften eingehen, ist es im Sinne der Klarheit zweckmäßig, Testbedingungen zu definieren.

Gemäß einer Weiterbildung der Erfindung definiert der Schwingungsknoten der Scheitelsekante im zweiten spiegelsymmetrischen Biegeschwingungsmode eine Knotenebene, die senkrecht zur Messrohrquerebene und senkrecht zur Messrohrlängsebene verläuft, wobei die Scheitelsekante in der Knotenebene keine Schwingungsknoten aufweist, wenn das Messrohr im ersten spiegelsymmetrische Biegeschwingungsmode schwingt.

Gemäß einer Weiterbildung weist das Messrohr in der Messrohrquerebene einen Außendurchmesser $d_a$ auf, wobei die Knotenebene von dem Schnittpunkt zwischen der Messrohrmittenlinie und der Messrohrquerebene nicht mehr als drei Außendurchmesser, insbesondere nicht mehr als zwei Außendurchmesser beabstandet ist.

Gemäß einer Weiterbildung der Erfindung verläuft eine Scheitelebene, welche senkrecht zur Messrohrquerebene und senkrecht zur Messrohrlängsebene durch den Schnittpunkt zwischen der Messrohrmittenlinie und der Messrohrquerebene verläuft, zwischen der Knotenebene und dem Erreger.

Gemäß einer Weiterbildung der Erfindung ist der Erreger nicht mehr als zwei Außendurchmesser des Messrohrs, insbesondere nicht mehr als einen Außendurchmesser von der Scheitelebene beabstandet ist.

Gemäß einer Weiterbildung der Erfindung ist die Betriebsschaltung dazu eingerichtet, die Erregerleiterschleife mit einem Signal zum Anregen des ersten spiegelsymmetrischen Biegeschwingungsmodes zu treiben.

Gemäß einer Weiterbildung der Erfindung weist die Erregerleiterschleife einen von dem ersten symmetrischen Biegeschwingungsmode abhängigen Gegeninduktionswiderstand $R_{g1}$ auf, der von der Position des Erregers abhängt; wobei der Erreger so positioniert ist, dass der dimensionslose Leistungsfaktor $pc_1$

$$pc_1 = \frac{4 \cdot R_\Omega \cdot R_{g1}}{\left(R_\Omega + R_{g1}\right)^2}$$

einen Wert aufweist, der nicht weniger als 0,8 beträgt, wenn das Messrohr mit Wasser gefüllt ist und bei 300 K mit der Eigenfrequenz des ersten spiegelsymmetrischen Biegeschwingungsmodes von dem elektrodynamischen Erreger zu Biegeschwingungen angeregt wird.

Gemäß einer Weiterbildung der Erfindung ist ein Gesamtleistungsfaktor $pc_{1,3}$ gegeben als:

$$pc_{1,3} = pc_1 \cdot pc_3$$

wobei $pc_{1,3}$ nicht weniger als 0,7 beträgt.

Gemäß einer Weiterbildung der Erfindung ist der ohmschen Widerstand $R_\Omega$ zu mindestens 90% durch eine Spule oder mehrere Spulen des Erregers und ggf. einen Begrenzungswiderstand bzw. mehrere Begrenzungswiderstände insbesondere zum Einhalten der Zündschutzart Ex-i in der Leiterschleife gegeben.

In einer Weiterbildung der Erfindung umfasst der Messaufnehmer weiterhin mindestens einen Sensor zum Erfassen von Schwingungen des Messrohrs bzw. der Messrohre gegeneinander, insbesondere ein Paar von Sensoren, die symmetrisch zur Messrohrquerebene angeordnet sind.

Um zum konkreten Entwurf eines erfindungsgemäßen Messaufnehmers zu gelangen, insbesondere zur Position des Erregers, kann das Schwingungsverhalten des Messrohrs bzw. der Messrohre des Messaufnehmers analysiert werden, beispielsweise durch Modellierung mit finiten Elementen und / oder Experimentalanordnungen. Auf diese Weise können die Schwingungsknoten des zweiten spiegelsymmetrischen Biegeschwingungsmodes, also des f3-Modes, identifiziert werden, welche eine Knotenebene definieren, zu welcher der Erreger beabstandet zu positionieren ist, da eine Anregung des f3-Modes in oder nahe der Knotenebene nicht praktikabel bzw. ineffizient ist. Andererseits ist zu berücksichtigen, dass die Auslenkung der Biegelinie des Messrohrs im f3-Mode überproportional mit Abstand zur Knotenebene wachsen kann, weshalb dieser Abbstand zu begrenzen ist. Auf Basis der Biegelinien, der Eigenfrequenz und der Güte des Messrohrs im betrachteten Biegeschwingungsmode kann der Gegeninduktionswiderstand berechnet und bei der Ermittlung des Leistungsfaktors berücksichtigt werden. Eine experimentelle Bestimmung der Gegeninduktion in Abhängigkeit von der Erregerposition bzw. eine Kombination von Simulationsergebnissen und experimenteller Überprüfung ist gleichermaßen möglich.

Die Erfindung wird nun anhand des in den Zeichnungen dargestellten Ausführungsbeispiels näher erläutert. Es zeigt:

    Fig. 1: ein Ausführungsbeispiel eines erfindungsgemäßen Messaufnehmers;

    Fig. 2: ein Koordinatensystem zur Beschreibung eines Ausführungsbeispiels eines erfindungsgemäßen Messaufnehmers;

    Fig. 3a: typische Biegelinien eines Messrohrs für den f1-Mode und den f3-Mode in Aufsicht

    Fig. 3b: typische Biegelinien für den f1-Mode und den f3-Mode in orthogonaler Projektion auf die Messrohrquerebene und die zugehörigen Leistungsfaktoren sowie das Produkt der Leistungsfaktoren;

    Fig. 4a: eine schematisches Modell zur Beschreibung eines Oszillators; und

    Fig. 4b: ein schematisches Schaltbild zu den wirksamen Widerständen in einem Erregerkreis.

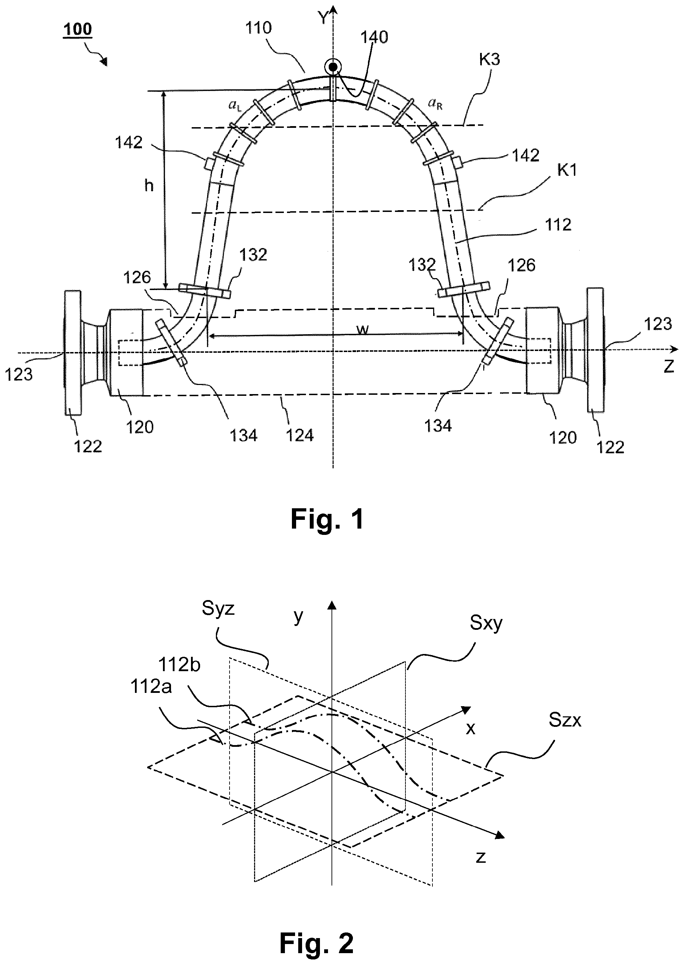

Das in Fig. 1 dargestellte Ausführungsbeispiel eines erfindungsgemäßen Messaufnehmers 100 umfasst ein Paar von gebogenen Messrohren 110. Die Messrohre 110 erstrecken sich zwischen einem einlassseitigen Sammler 120 und einem auslassseitigen Sammler 120, und sind mit diesen fest verbunden, beispielsweise durch Einwalzen, Schweißen, oder Löten. Zwischen den Sammlern 120 erstreckt sich ein massives Trägerrohr 124, das mit beiden Sammlern fest verbunden ist, wodurch die Sammler 120 starr miteinander gekoppelt sind. Das Trägerrohr 124 weist an seiner Oberseite Öffnungen 126 auf, durch welche die Messrohre 110 von den Sammlern 120 aus dem Trägerrohr 124 heraus und wieder zurück geführt sind.

Die Sammler 120 weisen endständig jeweils einen Flansch 122 auf, mittels dessen das Coriolis-Massedurchflussmessgerät bzw. Dichtemessgerät in einer Rohrleitung zu installieren ist. Durch zentrale Öffnungen 123 in den Flanschen 122 ist ein Massestrom durch die Messrohre 110 zu führen, um den Massestrom bzw. dessen Dichte zu messen.

Anhand von Fig. 2 sollen einige Symmetrieeigenschaften von erfindungsgemäßen Messaufnehmern vorgestellt werden. Hierzu sind Messrohrmittelachsen 112a, 112b der beiden Messrohre 110 dargestellt, welche den Oszillator bilden. Die Messrohrmittelachsen 112a, 112b verlaufen symmetrisch zu einer ersten Spiegelebene Syz, welche zwischen den Messrohren verläuft. Die Messrohrmittelachsen verlaufen weiterhin symmetrisch zu einer zweiten Spiegelebene Sxy, der so genannten Messrohrquerebene, welche senkrecht zur ersten Spiegelebene Syz verläuft. In der Messrohrquerebene, liegen Scheitelpunkte der Messrohre bzw. der Messrohrmittelachsen. Die Messrohrachsen 112a, 112b verlaufen vorzugsweise in Ebenen, die parallel zur ersten Spiegelebene verlaufen. Bezüglich einer dritte Ebene Szx, welche senkrecht zur ersten Spiegelebene und zur zweiten Spiegelebene verläuft, und in welcher die Messrohrachsen 112a, 112b in den Sammlern verlaufen ist keine Symmetrie der Messrohre gegeben. Die Schnittlinie zwischen der ersten Spiegelebene Syz und der dritten Ebene definiert eine Z-Achse eines Koordinatensystems des Messaufnehmers. Die Schnittlinie zwischen der zweiten Spiegelebene Sxy und der dritten Ebene Szx definiert eine X-Achse des Koordinatensystems, und die Schnittlinie zwischen ersten Spiegelebene Syz und der zweiten Spiegelebene definiert die Y-Achse des Koordinatensystems. Mit den solchermaßen definierten Koordinaten wenden wir uns wieder Fig.1 zu.

Die Messrohre 110 bilden paarweise einen Oszillator, der insbesondere einen ersten zur Messrohrquerebene spiegelsymmtrischen Biegeschwingungsmode mit einer ersten Eigenfrequenz f1 und einem zweiten zur Messrohrquerebene spiegelsymmetrischen Biegeschwingungsmode mit einer zweiten Eigenfrequenz f3 aufweist, bei denen die Messrohre gegenphasig zueinander in X-Richtung schwingen. Zum Anregen der Biegeschwingungsmoden der Messrohre in X-Richtung ist spiegelsymmetrisch zur Messrohrquerebene eine elektrodynamische Erregeranordnung 140 vorgesehen, die beispielsweise eine Tauchspule an einem ersten Messrohr und einen Tauchkörper am gegenüberliegenden zweiten Messrohr umfasst. Einzelheiten zur vertikalen Position der Erregeranordnung in y Richtung werden weiter unten erläutert.

Zum Erfassen der Schwingungen der Messrohre sind symmetrisch zur Messrohrquerebene Sxy Sensoranordnungen 142 vorgesehen, die jeweils als induktive Anordnung mit einer Tauchspule an einem Rohr und einem Tauchkörper am anderen Rohr gestaltet sind. Einzelheiten dazu sind dem Fachmann bekannt, und brauchen hier nicht näher erläutert zu werden.

Zur Beeinflussung der Schwingungseigenschaften sind die Messrohre 110 einlassseitig und auslassseitig jeweils mit Kopplern 132, 134 verbunden, wobei durch die Position der beiden inneren der Koppler 132, also jener, welche einlassseitig bzw. auslassseitig jeweils am weitesten vom entsprechenden Sammler 120 entfernt sind, eine freie Schwingungslänge eines durch die beiden Messrohre 110 gebildeten Oszillators festgelegt ist. Diese freie Schwingungslänge beeinflusst die Biegeschwingungsmoden des Oszillators, insbesondere deren Eigenfrequenzen, mit welchen der Oszillator vorzugsweise anzuregen ist. Äußere Koppler 134, die jeweils zwischen den inneren Knotenplatten 132 und den Sammlern 120 angeordnet sind, dienen insbesondere dazu, weitere Schwingungsknoten zu definieren.

Die Größe h bezeichnet die Bogenhöhe des frei schwingfähigen Messrohrbogens zwischen den beiden inneren Kopplern 132, wobei die Bogenhöhe vom Schnittpunkt der Koppler mit der Messrohrmittenlinie bis zur Bogenhöhe der Messrohrmittenlinie in der Messrohrquereben gemessen ist.

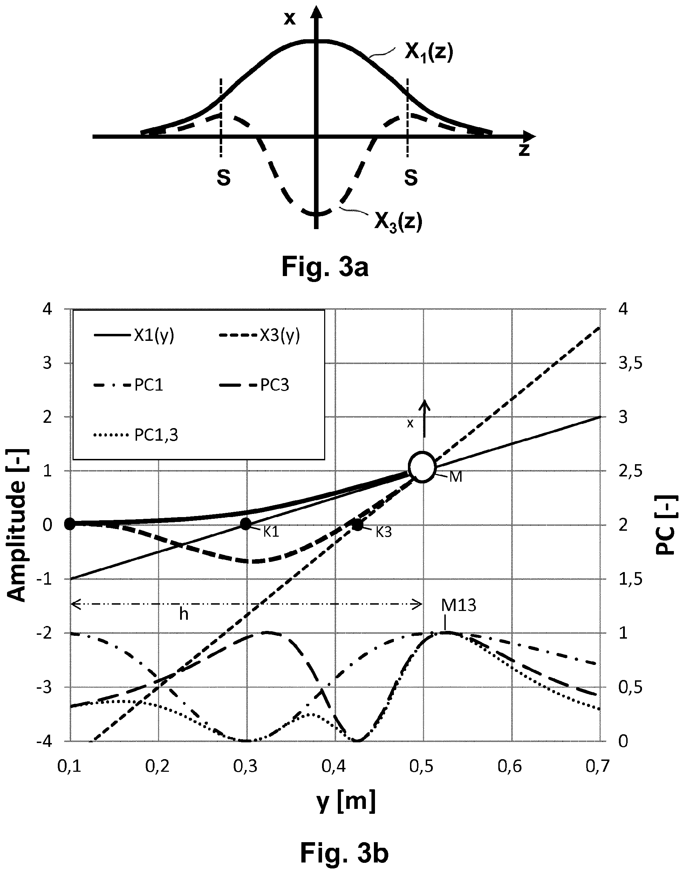

Das Schwingungsverhalten eines Messrohrs 110 wird nun anhand von Fign. 3a und 3b erläutert.

Fig. 3a zeigt exemplarische Biegelinien entlang der Messrohrmittenlinie $X_1(z)$ und $X_3(z)$ des ersten und zweiten spiegelsymmetrischen Biegeschwingungsmodes in orthogonaler Projektion auf die die Szx-Ebene. Die Z-Koordinate der Sensoranordnungen ist mit den Linien S angedeutet. Die Sensoranordnungen sind so positioniert, dass sie die Auslenkung beider Biegeschwingungsmoden erfassen können. Der elektrodynamische Erreger ist in der Messrohrquerebene Sxy zu positionieren, welche in dieser Projektion mit der X-Achse zusammenfällt. Die Auslenkung der Sensoranordnungen ist in einem Biegeschwingungsmode zur Auslenkung des Erregers proportional. Insoweit führt eine effiziente Auslenkung des Erregers auch zu einer effizienten Auslenkung der Sensoranordnungen. Ausgehend von dieser Erwägung wird im Folgenden insbesondere eine optimierte Erregerposition gesucht.

In Fig. 3b zeigen die Linien X1(y) und X3(y) die orthogonalen Projektionen der höhenabhängigen Amplituden der Messrohrmittenlinie eines Messrohrs im ersten bzw. zweiten spiegelsymmetrischen Biegeschwingungsmode auf die Messrohrquerebene Sxy, wobei die Amplituden im Scheitelpunkt der Messrohrmittenlinie auf 1 normiert sind. Das betrachtete Messrohr weist von den inneren Kopplern gemessen eine Bogenhöhe h = 0,4 m und innere Koppler bei y = 0,1 m auf. Weiterhin zeigt das Diagramm Scheitelsekanten, welche durch Punkte an der Oberfläche des Messrohrs verlaufen, die in der Ruhelage des Messrohrs auf der Schnittlinie zwischen der Messrohrlängsebene und der Messrohrquerebene liegen. Diese Scheitelsekanten sind insofern von Interesse, als ein Erreger mechanisch in der Messrohrquerebene Sxy am Messrohr zu fixieren ist und damit eine Auslenkung aufweist, die nicht nur von der Auslenkung der Messrohrmittenlinie sondern auch von der Torsion des Messrohrs in der Messrohrquerebene Sxy abhängt. Daher ist die zu erwartende Auslenkung eines Erregers in Abhängigkeit seines Montageabstands zur Messrohrmittenlinie auf der Scheitelsekante zu finden. In Fig. 3 bezeichnen K1 und K3 Positionen, in denen ein Erreger im ersten bzw. zweiten spiegelsymmetrischen Biegeschwingungsmode praktische keine Auslenkung erfahren würde. Der Erreger ist folglich von diesen Positionen beabstandet anzuordnen.

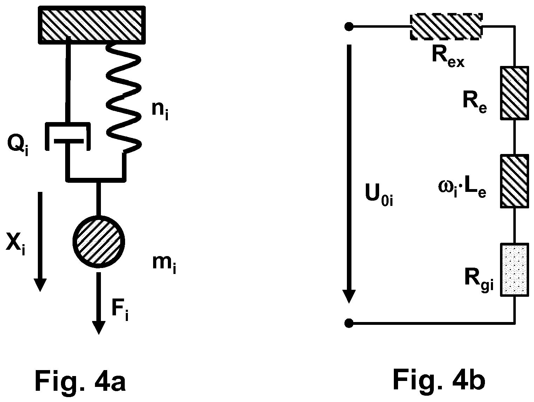

Weitere Gesichtspunkte zur Anordnung des elektrodynamischen Erregers werden anhand der Figuren 4a und 4b erläutert.

Das Messrohr bzw. die Messrohre eines Oszillators werden durch eine Kraft F, die sich aus einer Summe modaler Kräfte $F_i$ zusammensetzt zum Schwingen in Biegeschwingungsmoden angeregt, welche gegeben sind durch das Produkt des modalen Beitrags $I_i$ zum Erregerstrom I, mit einer Konstanten e, also

$$F_i = I_i \cdot e \qquad (1)$$

Andererseits wird durch den schwingenden Oszillator eine Induktionsspannung $U_{gi}$ im Erreger induziert, deren Amplitude gegeben ist als

$$U_{gi} = \dot{X}_i \cdot e \qquad (2),$$

wobei e in (1) und (2) die gleiche, von der Induktivität des Erregers abhängige Konstante ist.

Die Amplitude $X_i$ des i-ten Biegeschwingungsmodes am betrachteten Ort, beispielsweise in der Messrohrquerebene, hängt ab von der schwingenden Masse $m_i$, Nachgiebigkeit $n_i$, und der Güte $Q_i$ des Oszillators im jeweiligen Schwingungsmode.

Bei Anregung mit der Resonanzkreisfrequenz $\omega_i$ ist die Amplitude der Auslenkung gegeben als:

$$X_i = n_i \cdot Q_i \cdot F_i \qquad (3).$$

Die Geschwindigkeit beträgt:

$$\dot{X}_i = \omega_i \cdot n_i \cdot Q_i \cdot F_i \qquad (4).$$

Für die Induktionsspannung $U_{gi}$ folgt dann mit (1) und (2)

$$U_{gi} = e^2 \cdot \omega_i \cdot n_i \cdot Q_i \cdot I_i \qquad (5),$$

bzw.

$$U_{gi} = R_{gi} \cdot I_i \qquad (6),$$

wobei $R_{gi}$ der Gegeninduktionswiderstand ist.

$$R_i = e^2 \cdot \omega_i \cdot n_i \cdot Q_i \qquad (7),$$

Die elektrische Induktionsleistung $P_i$ ist gegeben als Produkt aus der Induktionsspannung $U_{gi}$ und dem Strom $I_i$, bzw. als das Produkt aus dem Induktionswiderstand $R_{gi}$ und dem Quadrat des Stroms $I_i$. Der Strom ist gegeben durch $I = U / R$, wobei $R$ der Gesamtwiderstand der in Fig 4b gezeigten Erregerschaltung ist, welche den ohmschen Widerstand $R_e$ des Erregers, den induktiven Widerstand $\omega_i \cdot L_e$ des Erregers und den Gegeninduktionswiderstand des Erregers $R_{gi}$ in Reihe umfasst. Zusätzlich kann noch ein Schutzwiderstandselement $R_{ex}$ zum Einhalten einer Zündschutzart vorgesehen sein. Wenn man berücksichtigt, dass der induktive Widerstand $\omega \cdot L_e$ des Erregers wesentlich kleiner ist als die ohmschen Widerstände, folgt für die elektrische Erregerleistung:

$$P_i = U_0{}^2 \cdot \frac{R_{gi}}{\left(R_{ex} + R_e + R_{gi}\right)^2} \qquad (8).$$

Dieser Ausdruck wird maximal, wenn der Gegeninduktionswiderstand $R_{gi}$ gleich der dem ohmschen Widerstand $R_\Omega$ der Erregerleiterschleife ist also der Summe des ohmschen Widerstand $R_e$ des Erregers und des Widerstand des ggf. vorhandenen Schutzwiderstandselements $R_{ex}$ ist, also $R_{gi} = R_\Omega = R_{ex} + R_e$. Es ist zweckmäßig einen dimensionslosen Leistungsfaktor $pc_i$ für die verschiedenen Biegeschwingungsmoden zur Beschreibung dieses Sachverhalts zu definieren:

$$pc_i = \frac{4 \cdot R_\Omega \cdot R_{gi}}{\left(R_\Omega + R_{gi}\right)^2} \qquad (9)$$

Dieser Leistungswert nimmt den Maximalwert $pc_i = 1$ an, wenn $R_{gi} = R_\Omega$.

Bei der Entwicklung eines Messaufnehmers bieten die obigen Gleichungen einen Ansatzpunkt zur Kontrolle von $R_{gi}$ über die Nachgiebigkeit $n_i$, welche für den elektrodynamischen Erreger von dessen Position in der Messrohrquerebene abhängt. Damit lassen sich die Leistungsfaktoren eines Messaufnehmers für die verschiedenen Moden festlegen. Für ein gegebenes Messrohr sind die modenabhängigen Amplituden, Geschwindigkeiten, Kräfte und Eigenfrequenzen beispielsweise durch Simulation zu ermitteln und experimentell zu überprüfen. Die Güte $Q_i$ für einen Schwingungsmode ist über die Breite einer Resonanz bzw. über das Abklingverhalten einer Schwingung zugänglich. Schließlich kann die Induktionsspannung bei einem frei schwingenden Messrohr zur Verifizierung berechneter Größen experimentell bestimmt werden.

Fig. 3b zeigt die Leistungsfaktoren $pc_i$ und $pc_3$ für den ersten bzw. zweiten spiegelsymmetrischen Biegeschwingungsmode sowie deren Produkt $pc_{1,3}$ in Abhängigkeit von der Position des Erregers. Bei den Knoten K1 und K2 entlang der Scheitelsekanten nehmen die Leistungsfaktoren erwartungsgemäß den Wert 0 ein. Weiterhin zeigt sich, dass eine beliebig gesteigerte Amplitude $X_i$, zu welcher die Nachgiebigkeit $n_i$ proportional ist, nicht zu einer unbegrenzten Steigerung des Leistungsfaktors führt. Vorliegend liegt das Maximum von $pc_3$ sowie das Maximum M1,3 von $pc_{1,3}$ knapp oberhalb des Messrohrbogens. In dieser Position ist die elektrodynamische Erregeranordnung in Fig. 1 montiert.

Im Ergebnis gibt die vorliegende Erfindung damit die Grundlagen, auf Basis der optimierten Leistungsfaktoren einen Messaufnehmer mit effizienter Anregung bereitzustellen.

**Patentansprüche**

1. Messaufnehmer (100) vom Vibrationstyp, umfassend:

     einen Trägerkörper (120);
     mindestens ein gebogenes Messrohr (110) zum Führen eines Fluids, welches Messrohr, einen einlassseitigen Endabschnitt und einen auslassseitigen Endabschnitt aufweist, wobei das Messrohr (110) am einlassseitigen Endabschnitt, und am auslassseitigen Endabschnitt von dem Trägerkörper (120) gehalten ist, wobei das Messrohr einen frei schwingfähigen Abschnitt aufweist;
     eine Betriebsschaltung;
     einen elektrodynamischen Erreger (140) in einer Erregerleiterschleife zum Anregen von Biegeschwingungen des Messrohrs (110); und
     mindestens einen Sensor (142) zum Erfassen von Schwingungen des Messrohrs (110);
     wobei eine Messrohrlängsebene definiert ist als eine Ebene, bei welcher ein Integral entlang einer Messrohrmittenlinie des schwingfähigen Abschnitts der Abstandsquadrate zwischen der Messrohrmittenlinie in der Ruhelage des Messrohrs (110) und der Ebene ein Minimum aufweist,
     wobei eine Messrohrquerebene definiert ist, zu der das Messrohr einen spiegelsymmetrischen Verlauf aufweist, wobei die Messrohrquerebene senkrecht zur Messrohrlängsebene verläuft;
     wobei das Messrohr (110) einen ersten zur Messrohrquerebene spiegelsymmetrischen Biegeschwingungsmode mit einer ersten Eigenfrequenz f1 aufweist die von der Dichte eines durch das Messrohr geführten Mediums abhängt,

wobei das Messrohr (110) einen zweiten zur Messrohrquerebene spiegelsymmetrischen Biegeschwingungsmode mit einer zweiten Eigenfrequenz f3 aufweist, die von der Dichte des durch das Messrohr geführten Mediums abhängt,

wobei die zweite Eigenfrequenz größer ist als die erste Eigenfrequenz f1,

wobei das Messrohr (110) eine Scheitelsekante aufweist, welche die Punkte der äußeren Oberfläche der Messrohrwand schneidet, die in der Ruhelage des Messrohrs auf der Schnittlinie zwischen der Messrohrlängsebene und der Messrohrquerebene liegen, wobei die Scheitelsekante einen Schwingungsknoten aufweist, wenn das Messrohr im zweiten spiegelsymmetrischen Biegeschwingungsmode schwingt,

wobei die Betriebsschaltung dazu eingerichtet ist, die Erregerleiterschleife mit einem Signal zum Anregen des zweiten spiegelsymmetrischen Biegeschwingungsmodes zu treiben,

wobei die Erregerleiterschleife einen ohmschen Widerstand $R_\Omega$ und einen von dem Schwingungsmode abhängigen Gegeninduktionswiderstand $R_{g3}$ aufweist, der von der Position des Erregers abhängt;

wobei der Messaufnehmer mindestens ein Paar von solchen Messrohren mit einer gemeinsamen Messrohrquerebene umfasst, wobei der elektrodynamische Erreger dazu eingerichtet ist, Biegeschwingungen der Messrohre gegeneinander anzuregen,

**dadurch gekennzeichnet, dass**

der Erreger so positioniert ist, dass ein dimensionslose Leistungsfaktor

$$pc_3 = \frac{4 \cdot R_\Omega \cdot R_{g3}}{\left(R_\Omega + R_{g3}\right)^2}$$

einen Wert aufweist, der nicht weniger als 0,8 beträgt, wenn das Messrohr (110) mit Wasser gefüllt ist und bei 300 K mit der Eigenfrequenz des zweiten spiegelsymmetrischen Biegeschwingungsmodes von dem elektrodynamischen Erreger zu Biegeschwingungen angeregt wird.

2. Messaufnehmer nach Anspruch 1, wobei der Schwingungsknoten der Scheitelsekante im zweiten spiegelsymmetrischen Biegeschwingungsmodes eine Knotenebene definiert, die senkrecht zur Messrohrquerebene und senkrecht zur Messrohrlängsebene verläuft, wobei die Scheitelsekante in der Knotenebene keine Schwingungsknoten aufweist, wenn das Messrohr im ersten spiegelsymmetrische Biegeschwingungsmode schwingt.

3. Messaufnehmer nach Anspruch 1, wobei das Messrohr in der Messrohrquerebene einen Außendurchmesser $d_a$ aufweist, wobei Knotenebene von dem Schnittpunkt zwischen der Messrohrmittenlinie und der Messrohrquerebene nicht mehr als drei Außendurchmesser, insbesondere nicht mehr als zwei Außendurchmesser beabstandet ist.

4. Messaufnehmer nach Anspruch 2 oder 3, wobei eine Scheitelebene, welche senkrecht zur Messrohrquerebene und senkrecht zur Messrohrlängsebene durch den Schnittpunkt zwischen der Messrohrmittenlinie und der Messrohrquerebene verläuft, zwischen der Knotenebene und dem Erreger verläuft.

5. Messaufnehmer nach Anspruch 4, wobei der Erreger nicht mehr als zwei Außendurchmesser des Messrohrs , insbesondere nicht mehr als einen Außendurchmesser von der Scheitelebene beabstandet ist.

6. Messaufnehmer nach einem der vorhergehenden Ansprüche, wobei die Betriebsschaltung dazu eingerichtet ist, die Erregerleiterschleife mit einem Signal zum Anregen des ersten spiegelsymmetrischen Biegeschwingungsmodes zu treiben.

7. Messaufnehmer nach Anspruch 6, wobei die Erregerleiterschleife einen von dem ersten spiegelsymmetrischen Schwingungsmode abhängigen Gegeninduktionswiderstand $R_{g1}$ aufweist, der von der Position des Erregers abhängt; wobei der Erreger so positioniert ist, dass der dimensionslose Leistungsfaktor $pc_1$

$$pc_1 = \frac{4 \cdot R_\Omega \cdot R_{g1}}{\left(R_\Omega + R_{g1}\right)^2}$$

einen Wert aufweist, der nicht weniger als 0,8 beträgt, wenn das Messrohr mit Wasser gefüllt ist und bei 300 K mit der Eigenfrequenz des ersten spiegelsymmetrischen Biegeschwingungsmodes von dem elektrodynamischen Erreger zu Biegeschwingungen angeregt wird.

8. Messaufnehmer nach Anspruch 7, wobei ein Gesamtleistungsfaktor $pc_{1,3}$ gegeben ist als:

$$pc_{1,3} = pc_1 \cdot pc_3$$

wobei $pc_{13}$ nicht weniger als 0,7 beträgt.

9. Messaufnehmer nach einem der vorhergehenden Ansprüche, wobei der ohmsche Widerstand $R_\Omega$ zu mindestens 90% durch eine Spule oder mehrere Spulen des Erregers und ggf. einen Begrenzungswiderstand bzw. mehrere Begrenzungswiderstände insbesondere zum Einhalten der Zündschutzart Ex-i in der Leiterschleife gegeben ist.

10. Messaufnehmer nach einem der vorhergehenden Ansprüche, wobei die Messrohre parallele Messrohrlängsebenen aufweisen.

11. Messaufnehmer nach einem der vorhergehenden Ansprüche, weiterhin umfassend ein Paar von Sensoren, die symmetrisch zur Messrohrquerebene angeordnet sind.

**Claims**

1. A vibration-type measuring transducer (100), comprising:

a support body (120);
at least one curved measuring tube (110) for guiding a fluid, which measuring tube has an inlet-side end section and an outlet-side end section, wherein the measuring tube (110) is held by the support body (120) at the inlet-side end section and at the outlet-side end section, wherein the measuring tube has a freely oscillatable section;
an operating circuit;
an electrodynamic exciter (140) in an exciter conductor loop for exciting bending oscillations of the measuring tube (110); and
at least one sensor (142) for registering oscillations of the measuring tube (110);
wherein a measuring tube longitudinal plane is defined as a plane in which an integral along a measuring tube center line of the oscillatable section of the squares of the distances between the measuring tube center line in the resting position of the measuring tube (110) and the plane has a minimum,
wherein a measuring tube transverse plane is defined to which the measuring tube runs mirror-symmetrically, wherein the measuring tube transverse plane runs perpendicularly to the measuring tube longitudinal plane;
wherein the measuring tube (110) has a first bending oscillation mode that is mirror symmetric to the measuring tube transverse plane and that has a first eigenfrequency f1 that depends on the density of a medium guided through the measuring tube,
wherein the measuring tube (110) has a second bending oscillation mode that is mirror-symmetric to the measuring tube transverse plane and that has a second eigenfrequency f3 that depends on the density of the medium guided through the measuring tube,
wherein the second eigenfrequency is greater than the first eigenfrequency f1,
wherein the measuring tube (110) has a peak secant that intersects the points of the outer surface of the measuring tube wall that in the resting position of the measuring tube lie on a line of intersection between the measuring tube longitudinal plane and the measuring tube transverse plane, wherein the peak secant has an oscillation node when the measuring tube oscillates in the second mirror-symmetric bending oscillation mode,
wherein the operating circuit is adapted to drive the exciter conductor loop with a signal for exciting the second mirror-symmetric bending oscillation mode,
wherein the exciter conductor loop has an ohmic resistance $R_\Omega$ and a mutual induction resistance $R_{g3}$ depending on the oscillation mode and on the position of the exciter;
wherein the measuring transducer comprises at least one pair of such measuring tubes with a common measuring tube transverse plane, wherein the electrodynamic exciter is adapted to excite bending oscillations of the measuring tubes relative to one another,
wherein
the exciter is positioned such that a dimensionless power factor

$$pc_3 = \frac{4 \cdot R_\Omega \cdot R_{g3}}{\left(R_\Omega + R_{g3}\right)^2}$$

has a value that is not less than 0.8 when the measuring tube (110) is filled with water and is excited by the electrodynamic exciter with the eigenfrequency of the second mirror-symmetric bending oscillation mode to excite bending oscillations at 300 K.

2. The measuring transducer as claimed in claim 1, wherein the oscillation node of the peak secant in the second mirror-symmetric bending oscillation mode defines a node plane which runs perpendicularly to the measuring tube transverse plane and perpendicularly to the measuring tube longitudinal plane, wherein the peak secant has no oscillation node in the node plane when the measuring tube oscillates in the first mirror-symmetric bending oscillation mode.

3. The measuring transducer as claimed in claim 1, wherein the measuring tube has an external diame-

ter $d_a$ in the measuring tube transverse plane, wherein the node plane is no more than three external diameters, in particular no more than two external diameters, away from the intersection between the measuring tube center line and the measuring tube transverse plane.

4. The measuring transducer as claimed in claim 2 or 3, wherein a peak plane which runs perpendicularly to the measuring tube transverse plane and perpendicularly to the measuring tube longitudinal plane through the intersection between the measuring tube center line and the measuring tube transverse plane, runs between the node plane and the exciter.

5. The measuring transducer as claimed in claim 4, wherein the exciter is no more than two external diameters of the measuring tube, in particular no more than one external diameter, away from the peak plane.

6. The measuring transducer as claimed in one of the preceding claims, wherein the operating circuit is adapted to drive the exciter conductor loop with a signal for exciting the first mirror-symmetric bending oscillation mode.

7. The measuring transducer as claimed in claim 6, wherein the exciter conductor loop has a mutual induction resistance $R_{g1}$ depending on the first mirror-symmetric oscillation mode and on the position of the exciter; wherein the exciter is positioned such that the dimensionless power factor $pc_1$

$$pc_1 = \frac{4 \cdot R_\Omega \cdot R_{g1}}{\left(R_\Omega + R_{g1}\right)^2}$$

has a value that is not less than 0.8 when the measuring tube is filled with water and is excited by the electrodynamic exciter with the eigenfrequency of the first mirror-symmetric bending oscillation mode to excite bending oscillations at 300 K.

8. The measuring transducer as claimed in claim 7, wherein a total power factor $pc_{1,3}$ is given as:

$$pc_{1,3} = pc_1 \cdot pc_3$$

wherein $pc_{13}$ is not less than 0.7.

9. The measuring transducer as claimed in one of the preceding claims, wherein the ohmic resistance $R_\Omega$ of at least 90% is provided through a coil or a plurality of coils of the exciter and, if applicable, a limiting resistor or a plurality of limiting resistors in particular to keep to the type of ignition protection Ex-i in the conductor loop.

10. The measuring transducer as claimed in one of the preceding claims, wherein the measuring tubes have parallel measuring tube longitudinal planes.

11. The measuring transducer as claimed in one of the preceding claims, further comprising a pair of sensors which are arranged symmetrically to the measuring tube transverse plane.

## Revendications

1. Capteur (100) du type à vibration, comprenant :

un corps de support (120) ;
au moins un tube de mesure (110) courbé, lequel tube de mesure est destiné à guider un fluide et lequel tube de mesure présente une partie d'extrémité côté entrée et une partie d'extrémité côté sortie, le tube de mesure (110) étant supporté par le corps de support (120) à la partie d'extrémité côté entrée et à la partie d'extrémité côté sortie, le tube de mesure présentant une partie pouvant vibrer librement ;
un circuit d'exploitation ;
un excitateur électrodynamique (140) dans une boucle conductrice d'excitation destinée à exciter le tube de mesure (110) en vibrations de flexion ; et
au moins un capteur (142) destiné à mesurer les vibrations du tube de mesure (110) ;
un plan longitudinal de tube de mesure étant défini comme un plan dans lequel une intégrale le long d'une ligne médiane de tube de mesure de la partie apte à vibrer des carrés de distance entre la ligne médiane de tube de mesure dans la position de repos du tube de mesure (110) et le plan présente un minimum,
un plan transversal de tube de mesure étant défini, plan par rapport auquel le tube de mesure présente un tracé à symétrie spéculaire, le plan transversal de tube de mesure étant perpendiculaire au plan longitudinal de tube de mesure ;
le tube de mesure (110) présentant un premier mode de vibration de flexion à symétrie spéculaire par rapport au plan transversal de tube de mesure, avec une première fréquence propre f1 qui dépend de la densité d'un produit guidé à travers le tube de mesure,
le tube de mesure (110) présentant un deuxième mode de vibration de flexion à symétrie spéculaire par rapport au plan transversal de tube de mesure avec une deuxième fréquence propre f3 qui dépend de la densité du produit guidé à travers le tube de mesure,
la deuxième fréquence propre étant supérieure à la première fréquence propre f1,

le tube de mesure (110) présentant une arête de sommet, laquelle arête coupe les points de la surface extérieure de la paroi de tube de mesure qui, lesquels points se trouvent, dans la position de repos du tube de mesure, sur la ligne d'intersection entre le plan longitudinal de tube de mesure et le plan transversal de tube de mesure, l'arête de sommet présentant un nœud de vibration lorsque le tube de mesure vibre dans le deuxième mode de vibration de flexion à symétrie spéculaire,

le circuit d'exploitation étant conçu pour commander la boucle conductrice d'excitation avec un signal destiné à l'excitation du deuxième mode de vibration de flexion à symétrie spéculaire, la boucle conductrice d'excitation présentant une résistance ohmique Ro et une résistance d'induction mutuelle $R_{g3}$ qui dépend du mode de vibration et qui dépend de la position de l'excitateur ;

le capteur comprenant au moins une paire de tels tubes de mesure avec un plan transversal de tube de mesure commun, l'excitateur électrodynamique étant conçu pour exciter en vibrations de flexion les tubes de mesure les uns par rapport aux autres,

**caractérisé en ce que**

l'excitateur est positionné de telle sorte qu'un facteur de puissance sans dimension

$$pc_3 = \frac{4 \cdot R_\Omega \cdot R_{g3}}{\left(R_\Omega + R_{g3}\right)^2}$$

présente une valeur qui n'est pas inférieure à 0,8 lorsque le tube de mesure (110) est rempli d'eau et est excité en vibration de flexion, à 300 K à la fréquence propre du deuxième mode de vibration de flexion à symétrie spéculaire, par l'excitateur électrodynamique.

2. Capteur selon la revendication 1, pour lequel le nœud de vibration de l'arête de sommet dans le deuxième mode de vibration de flexion à symétrie spéculaire définit un plan de nœud qui est perpendiculaire au plan transversal de tube de mesure et perpendiculaire au plan longitudinal de tube de mesure, l'arête de sommet ne présentant aucun nœud de vibration dans le plan nodal lorsque le tube de mesure vibre dans le premier mode de vibration de flexion à symétrie spéculaire.

3. Capteur selon la revendication 1, pour lequel le tube de mesure présente un diamètre extérieur $d_a$ dans le plan transversal de tube de mesure, le plan nodal n'étant pas distant du point d'intersection entre la ligne médiane de tube de mesure et le plan transversal de tube de mesure de plus de trois diamètres extérieurs, notamment de plus de deux diamètres extérieurs.

4. Capteur selon la revendication 2 ou 3, pour lequel un plan de sommet, lequel est perpendiculaire au plan transversal de tube de mesure et perpendiculaire au plan longitudinal de tube de mesure passant par le point d'intersection entre la ligne médiane de tube de mesure et le plan transversal de tube de mesure, s'étend entre le plan nodal et l'excitateur.

5. Capteur selon la revendication 4, pour lequel l'excitateur n'est pas distant de plus de deux diamètres extérieurs du tube de mesure, notamment de plus d'un diamètre extérieur du plan de sommet.

6. Capteur selon l'une des revendications précédentes, pour lequel le circuit d'exploitation est conçu pour commander la boucle conductrice d'excitation avec un signal destiné à l'excitation du premier mode de vibration de flexion à symétrie spéculaire.

7. Capteur selon la revendication 6, pour lequel la boucle conductrice d'excitation présente une résistance d'induction mutuelle $R_{g1}$ qui dépend du premier mode de vibration à symétrie spéculaire et qui dépend de la position de l'excitateur ; l'excitateur étant positionné de telle sorte que le facteur de puissance sans dimension $pc_1$

$$pc_1 = \frac{4 \cdot R_\Omega \cdot R_{g1}}{\left(R_\Omega + R_{g1}\right)^2}$$

présente une valeur qui n'est pas inférieure à 0,8 lorsque le tube de mesure est rempli d'eau et est excité en vibrations de flexion, à 300 K à la fréquence propre du premier mode de vibration de flexion à symétrie spéculaire, par l'excitateur électrodynamique.

8. Capteur selon la revendication 7, pour lequel un facteur de puissance total $pc_{1,3}$ est donné par la formule suivante :

$$pc_{1,3} = pc_1 \cdot pc_3$$

où $pc_{1,3}$ n'est pas inférieur à 0,7.

9. Capteur selon l'une des revendications précédentes, pour lequel la résistance ohmique Ro est fixée à au moins 90 % par une ou plusieurs bobines de l'excitateur et, le cas échéant, une ou plusieurs résistances de limitation, notamment pour respecter le mode de protection antidéflagrant Ex-i dans la boucle conductrice.

10. Capteur selon l'une des revendications précédentes, pour lequel les tubes de mesure présentent des plans longitudinaux de tube de mesure parallèles.

11. Capteur selon l'une des revendications précédentes, comprenant en outre une paire de capteurs disposés symétriquement par rapport au plan transversal du tube de mesure.

**Fig. 1**

**Fig. 2**

**Fig. 3a**

**Fig. 3b**

**Fig. 4a**

**Fig. 4b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015122661
- DE 102015112737
- US 20110036179 A1
- EP 1729099 A1
- EP 1130367 A1